(19) Europäisches Patentamt
European Patent Office
Office européen des brevets

(11) **EP 2 249 469 A1**

(12) **EUROPÄISCHE PATENTANMELDUNG**

(43) Veröffentlichungstag:
**10.11.2010 Patentblatt 2010/45**

(51) Int Cl.:
**H02M 3/158** (2006.01)

(21) Anmeldenummer: 09159778.1

(22) Anmeldetag: **08.05.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(71) Anmelder: **SIEMENS AKTIENGESELLSCHAFT**
**80333 München (DE)**

(72) Erfinder:
• **Cyron, Michael**
  **76187, Karlsruhe (DE)**
• **Klamm, Arnold**
  **76870, Kandel (DE)**

(54) **Schaltungsanordnung zur Versorgung einer Last mit einem Ausgangsstrom**

(57) Es wird eine Schaltungsanordnung zur Versorgung einer Last (RL) mit einem Ausgangsstrom ($I_a$) vorgeschlagen, wobei durch geeignete Maßnahmen die Schaltungsanordnung für einen Einsatz in parallel zu schaltenden Stromversorgungen einsetzbar ist und Auswirkungen von Bauteiltoleranzen auf eine gleichmäßige Auslastung weitgehend vermieden werden.

FIG 1

EP 2 249 469 A1

**Beschreibung**

Beschreibung

Schaltungsanordnung zur Versorgung einer Last mit einem Ausgangsstrom

Die Erfindung betrifft eine Schaltungsanordnung zur Versorgung einer Last mit einem Ausgangsstrom gemäß dem Oberbegriff des Anspruchs 1.

Eine derartige Schaltungsanordnung ist aus der DE 10 2005 014 992 A1 bekannt, wobei diese für einen Einsatz in parallel zu schaltenden Stromversorgungen bzw. -quellen geeignet ist. Parallel geschaltete Stromversorgungen bzw. -quellen stellen gemeinsam einer Last einen Gesamtstrom bereit, welcher größer ist als der Maximalstrom der jeweiligen Stromversorgung bzw. -quelle. Dabei wird im Wesentlichen eine gleichmäßige prozentuale Auslastung der Spannungsquellen, bezogen auf deren jeweiligen maximalen Versorgungsstrom, gewährleistet. Aufgrund von Toleranzen der eingesetzten Bauteile kann es allerdings vorkommen, dass zwischen den Ausgängen der Spannungsquellen kleinere Spannungsdifferenzen auftreten, was bereits eine größere ungleichmäßige Lastverteilung dieser Spannungsquellen bewirkt. Beispielsweise ist es möglich, eine erste und eine zweite Quelle theoretisch so auszugestalten, dass jede dieser Quellen einen Nennstrom In (100 %-Lastversorgung Volllast) zur Versorgung einer Last mit einem Strom 2•In (200 %-Lastversorgung) beiträgt, in der praktischen Ausgestaltung jedoch aufgrund von Bauteiltoleranzen eine dieser Quellen aber lediglich einen Strom von 0,8•In (80 %-Lastversorgung) und die andere dagegen 1,2•In (120 %-Lastversorgung) liefert.

Der vorliegenden Erfindung liegt die Aufgabe zugrunde, eine Schaltungsanordnung der eingangs genannten Art zu schaffen, welche für einen Einsatz in parallel zu schaltenden Stromversorgungen geeignet ist, wobei Auswirkungen von Bauteiltoleranzen auf eine gleichmäßige Auslastung weitgehend vermieden werden.

Diese Aufgabe wird durch die im kennzeichnenden Teil des Anspruchs 1 angegebenen Maßnahmen gelöst.

Die jeweiligen zweiten Mittel von parallel geschalteten Quellen - vorzugsweise zweite Mittel in Form eines Integrators - beginnen erst ab einer bestimmten Schwelle über die Zeit zu integrieren und senken die Ausgangsspannung ab. Dabei wird bei einer 100 %-Lastversorgung als Schwelle vorzugsweise ein den Nennstrom der jeweiligen Quelle übersteigender Ausgangsstrom gewählt. Die Integratoren verringern somit die Anforderungen an die Toleranzen der Bauteile der parallel geschalteten Quellen, wobei dennoch eine ausreichende Symmetrierung der Ausgangsströme bzw. der Ausgangsleistungen der Quellen erreicht wird. Es ist nicht erforderlich, dass die Quellen stille Reserven über ihre jeweilige spezifizierte Maximalleistung bereit halten. Die gleichmäßigere Leistungsverteilung bewirkt eine bessere Wärmeverteilung, was wiederum eine gleichmäßigere Alterung der Quellen bedeutet. Darüber hinaus sind die Anforderungen an Bauteiltoleranzen geringer, wodurch z. B. wesentlich kostengünstigere Widerstände eingesetzt werden können.

Vorteilhafte Ausgestaltungen der Erfindung ergeben sich aus den Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:

Figur 1      eine Schaltungsanordnung zur Versorgung einer Last mit einem Ausgangsstrom,

Figur 2 und 4      eine Darstellung von Lastkennlinien und

Figur 3 und 5      zwei parallel geschaltete Schaltungsanordnun- gen.

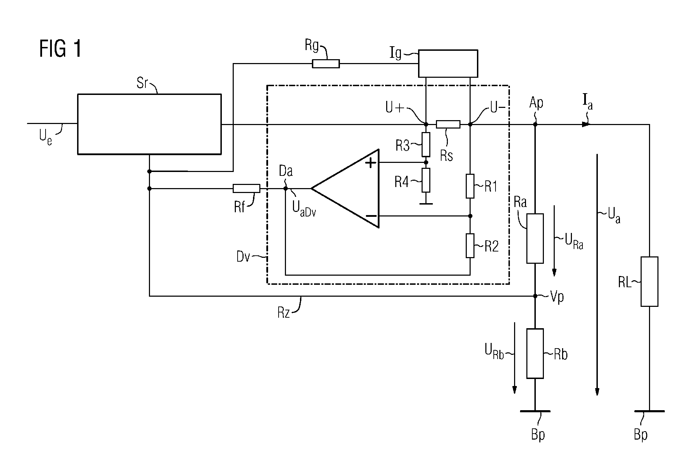

Die in den Figuren 1 bis 5 dargestellten gleichen Teile sind mit gleichen Bezugszeichen versehen.

In Figur 1 ist mit Sr ein mit einer geeigneten Beschaltung versehener Schaltregler einer Schaltungsanordnung bezeichnet, wobei diese aus einer Eingangsspannung $U_e$ eine Ausgangsspannung $U_a$ für eine an einem Anschlusspunkt Ap und einem Bezugspotential Bp angeschlossene Last RL erzeugt. Ein Rückkopplungszweig Rz ist an einem Verbindungspunkt Vp eines parallel zur Last RL geschalteten, mit Widerständen Ra, Rb versehenen Spannungsteilers angeschlossen. Unabhängig von einem Ausgangsstrom $I_a$ stellt der Schaltregler Sr an diesem Rückkopplungszweig Rz eine konstante Spannung $U_{Rb}$ ein. Zur Beeinflussung dieses Rückkopplungszweiges Rz ist ein Differenzverstärker Dv vorgesehen, welcher den Ausgangsstrom $I_a$ über einen niederohmigen Messwiderstand Rs erfasst, wobei in Abhängigkeit des Ausgangsstromes $I_a$ am Ausgang Da des Differenzverstärkers Dv eine Spannung $U_{aDv}$ zwischen einem Wert 0 V (Ausgangsstrom $I_a$ = 0, Leerlauf) und einem maximalen Wert (maximaler Ausgangsstrom, Volllast) variiert. Durch diese Beeinflussung des Rückkopplungszweigs Rz ändert sich eine Spannung $U_{Ra}$ am Widerstand Rb des Spannungsteilers in Abhängigkeit des Ausgangsstromes $I_a$. Die Beschaltung des Differenzverstärkers Dv mit Widerständen R1, R2, R3, R4 und des Spannungsteilers mit den Widerständen Ra, Rb ist so dimensioniert, dass die Spannung $U_{aDv}$ am Ausgang Da des Differenzverstärkers Dv die Spannung $U_{Rb}$ am Verbindungspunkt Vp des Spannungsteilers nicht überschreitet. Die Funktions- und Wirkungsweise einer derartigen Schaltungsanordnung mit einem Schaltregler, einem Differenzverstärker und einem Spannungsteiler, wobei diese Schaltungsanordnung zur Versorgung einer zu dem Spannungsteiler parallel geschalteten Last mit einem Ausgangsstrom vorgesehen ist, ist aus der DE 10 2005 014 992 A1 bekannt und braucht daher nicht näher erläutert zu werden. Einzelheiten dazu, insbesondere im Hinblick auf die Dimensionierung der Bauteile, sind aus dieser Druckschrift zu entnehmen.

Um die Ausgangsspannung $U_a$ auf einen vorgegebenen Wert zu begrenzen, falls der Ausgangsstrom $I_a$ einen Grenzwert überschreitet, weist die Schaltungsanordnung einen Integrator Ig mit hochohmigem Eingang auf, welcher ebenfalls den Ausgangsstrom $I_a$ am Messwiderstand Rs erfasst und dessen Ausgang über einen Widerstand Rg an den Schaltregler Sr angeschlossen ist, wobei die Widerstände Rg, Rf, Rb gleich dimensioniert sind. Als Grenzwert ist z. B. ein Strom vorgesehen, welcher während eines Dauerbetriebs im Rahmen einer maximal erreichbaren Leistung der Last RL zugeführt werden kann. Dieser als Nennstrom bezeichnete Strom beschreibt im vorliegenden Ausführungsbeispiel eine schräge Lastkennlinie.

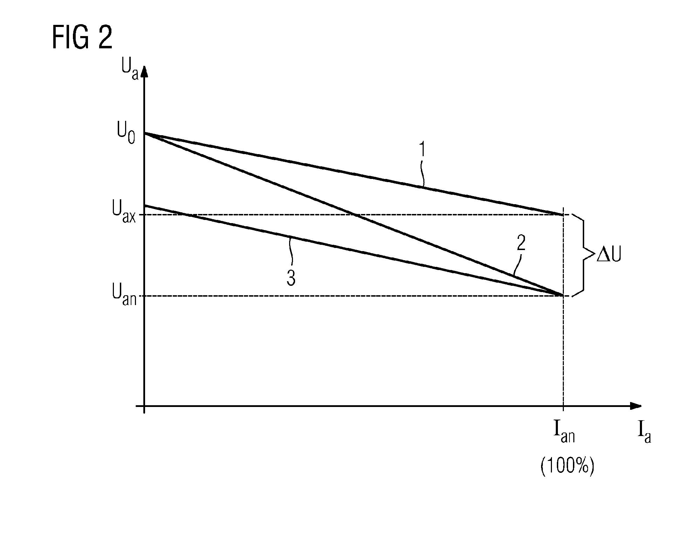

In diesem Zusammenhang wird auf Figur 2 verwiesen, in welcher eine erste, zweite und eine dritte Lastkennlinie 1, 2, 3 dargestellt sind, welche die Abhängigkeit des Ausgangsstromes $I_a$ von der Ausgangsspannung $U_a$ zeigen. Die erste Kennlinie 1 beschreibt einen ungeregelten Strom-Spannungsverlauf, wobei angenommen wird, dass sich aufgrund von Toleranzen der eingesetzten Bauelemente bei Volllast eine um eine Spannungsdifferenz $\Delta U$ von einer Nennspannung $U_{an}$ abweichende Spannung $U_{ax}$ und ein Nennstrom $I_{an}$ einstellen. Diese Abweichung bewirkt eine ständige überhöhte Leistungsabgabe bei Volllast. Allgemein gilt im vorliegenden Ausführungsbeispiel für den Strom-Spannungsverlauf die Gleichung:

$$U_a \; = \; m \cdot I_a \; + \; U_o,$$

wobei "m" eine negative Steigung und "$U_o$" die Leerlaufspannung (kein Stromfluss, $I_a = 0$) bedeuten.

Um den Einfluss der Toleranzen zu verhindern, greift der Integrator Ig derart in den Rückkopplungszweig Rz ein, dass entweder die Steigung m (Kennlinie 2) oder die Leerlaufspannung (Kennlinie 3) reduziert wird, so dass bei Volllast bzw. Versorgung der Last RL mit dem Nennstrom $I_{an}$ die Ausgangsspannung $U_a$ der Nennspannung $U_{an}$ entspricht.

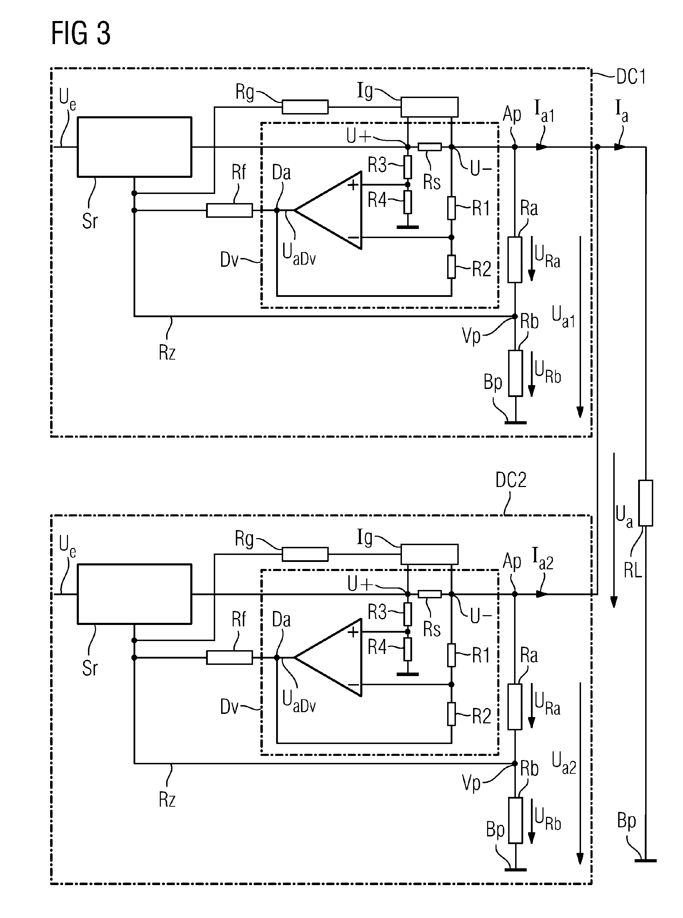

Im Folgenden wird auf Figur 3 verwiesen, in welcher eine erste und eine zweite Schaltungsanordnung nach Figur 1 parallel geschaltet sind, die mit DC1, DC2 bezeichnet sind. Es wird angenommen, dass die Schaltungsanordnungen DC1, DC2 (Quellen) im Wesentlichen identisch aufgebaut sind und dass diesen jeweils eine Eingangsspannung $U_e$ zugeführt ist. Ferner wird angenommen, dass die jeweilige maximale Ausgangsleistung dieser zwei Quellen DC1, DC2 gleich ist und dass die Last RL die maximale Ausgangsleistung (100 %) jeder dieser beiden Quellen DC1, DC2 - also die zweifache Ausgangsleistung (200 %) einer Quelle DC1, DC2 - verbrauchen kann. Darüber hinaus wird angenommen, dass die Leerlaufspannungen $U_o$ beider Quellen DC1, DC2 gleich sind und dass 105 % der Ausgangsleistung (der Nennleistung) für den Integrator der jeweiligen Quelle DC1, DC2 als Schwelle vorgesehen sind. Dies bedeutet, dass für die jeweilige Quelle DC1, DC2 der 1,05fache Nennstrom $I_{an}$ als Ausgangsstrom $I_a$ zugelassen wird.

Für den Fall, dass z. B. aufgrund von Toleranzen der Bauteile bzw. der Bauelemente die erste Quelle DC1 aktuell 86 % ihrer maximalen Ausgangsleistung und die zweite Quelle DC2 100 % ihrer maximalen Ausgangsleistung liefert, um die Last RL mit der benötigten Leistung zu versorgen, verbraucht die Last RL das 1,86fache einer einzelnen Quelle DC1, DC2 im Volllastbetrieb. Für den Fall, dass die Last RL mit der vorgesehenen maximalen Ausgangsleistung (200 %) der parallel geschalteten Quellen DC1, DC2 zu versorgen ist und keine Integratoren Ig vorgesehen sind, liefert beispielsweise die zweite Quelle DC2 dauernd 110 % ihrer maximalen Ausgangsleistung, wobei die erste Quelle DC1 dagegen nur mit 90 % ihrer maximalen Ausgangsleistung ausgelastet ist.

Aufgrund dessen, dass - wie vorausgesetzt - 105 % der Ausgangsleistung als Schwelle des jeweiligen Integrators der Quelle DC1, DC2 vorgesehen sind, beschränkt bzw. begrenzt der Integrator Ig der zweiten Quelle DC2 die ständige Leistungsabgabe dieser Quelle DC2 auf diese Schwelle, wobei der Integrator Ig derart in den Rückkopplungszweig Rz der zweiten Quelle DC2 eingreift, dass entweder die Steigung m (Kennlinie 2, Figur 2) oder die Leerlaufspannung (Kennlinie 3, Figur 2) reduziert wird. Dadurch wird die Ausgangsspannung $U_{a2}$ der stärker belasteten zweiten Quelle DC2 verringert, was zu einem niedrigeren Stromfluss dieser höher belasteten Quelle DC2 führt. Dieser durch den Integrator Ig verringerte Strom $I_{a2}$ der zweiten Quelle DC2 wird aufgrund der begrenzten Stromabgabe der zweiten Quelle DC2 durch eine höhere Stromabgabe bzw. einen höheren Strom $I_{a1}$ der geringer belasteten ersten Quelle DC1 ausgeglichen, so dass die größte Leistungsdifferenz zwischen den beiden Quellen nun nur 10 % beträgt, da die erste Quelle DC1 95 % und die zweite Quelle DC2 105 % der jeweiligen Leistung aufbringt.

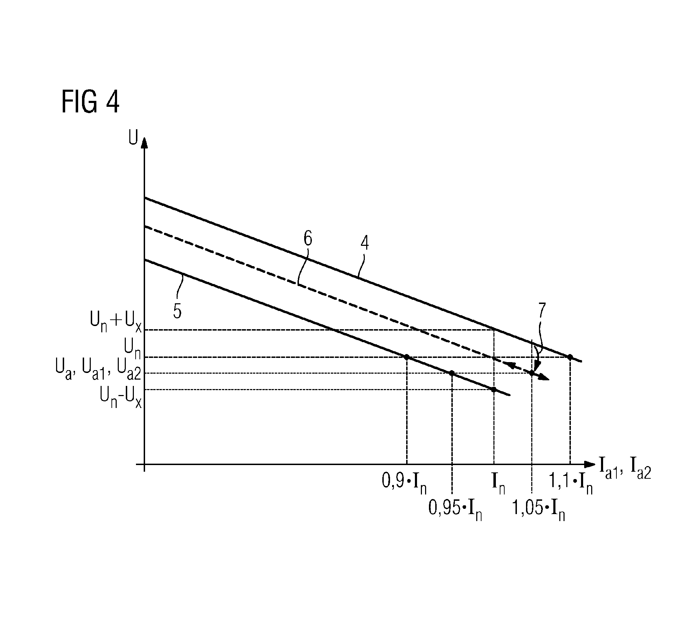

Zur Verdeutlichung der Begrenzung der Ausgangsspannung $U_{a2}$ der zweiten Quelle DC2 wird in diesem Zusammenhang auf Figur 4 verwiesen, in welcher Lastkennlinien 4, 5, 6 der ersten und zweiten Quelle DC1, DC2 unter den beschriebenen Voraussetzungen dargestellt sind. Mit $U_n$ ist dort die jeweilige Nennspannung und mit $I_n$ der jeweilige Nennstrom der ersten und zweiten Quelle DC1, DC2 bezeichnet. Aufgrund von Toleranzen der eingesetzten Bauteile ist die Leistungsabgabe der Quellen DC1, DC2 nicht identisch (Kennlinie 4, 5). Die erste Quelle DC1 erzeugt den Nennstrom $I_n$ bei einer um einen Wert $U_x$ erhöhten Nennspannung $U_n$, die zweite Quelle DC2 dagegen erzeugt den Nennstrom $I_n$ bei einer

um den Wert $U_x$ verminderten Nennspannung $U_n$. Wie angenommen, würde ohne den Integrator Ig die zweite Quelle DC2 bei Nennspannung $U_n$ bzw. Volllast dieser Quelle DC2 der Last RL den 1,1fachen Nennstrom $I_n$ als Ausgangsstrom $I_{a2}$ zuführen (Kennlinie 4), die erste Quelle DC1 dagegen bei Volllast dieser ersten Quelle DC1 bzw. bei Nennspannung $U_n$ den 0,9fachen Nennstrom $I_n$ als Ausgangsstrom $I_{a1}$ (Kennlinie 5). In diesem Fall ist die zweite Quelle DC2 überlastet, wobei die Überlastung oberhalb der zugelassenen Schwelle liegt, d. h., die Leistungsabgabe übersteigt das 1,05fache der Ausgangsleistung bei Nennspannung $U_n$.

Aufgrund des Integrators Ig der zweiten Quelle DC2 wird allerdings die Ausgangsspannung $U_{a2}$ der zweiten Quelle DC2 begrenzt, da deren Ausgangsstrom $I_{a2}$ den 1,05fachen Nennstrom $I_n$ erreicht bzw. überschreitet. Die Lastkennlinie 6 der zweiten Quelle DC2 wird abgesenkt, was in der Zeichnung durch das Bezugszeichen 7 und eine Kennlinie 5 dieser zweiten Quelle DC2 verdeutlicht wird. Durch die Begrenzung wird die Überlastung vermindert, wobei die Leistungsabgabe der zweiten Quelle auf das 1,05fache der Ausgangsleistung bei Volllast begrenzt wird. In diesem Fall sind die Ausgangsspannungen $U_{a1}$, $U_{a2}$ der Quellen DC1, DC2 und somit die Spannung $U_a$ an der Last RL geringer als die Nennspannung $U_n$. Die Begrenzung der Stromabgabe der zweiten Quelle DC2 wird durch eine höhere Stromabgabe bzw. einen höheren Strom $I_{a1}$ der geringer belasteten ersten Quelle DC1 ausgeglichen, wobei der Ausgangsstrom $I_{a1}$ der ersten Quelle DC1 auf den 0,95fachen Nennstrom $I_n$ ansteigt.

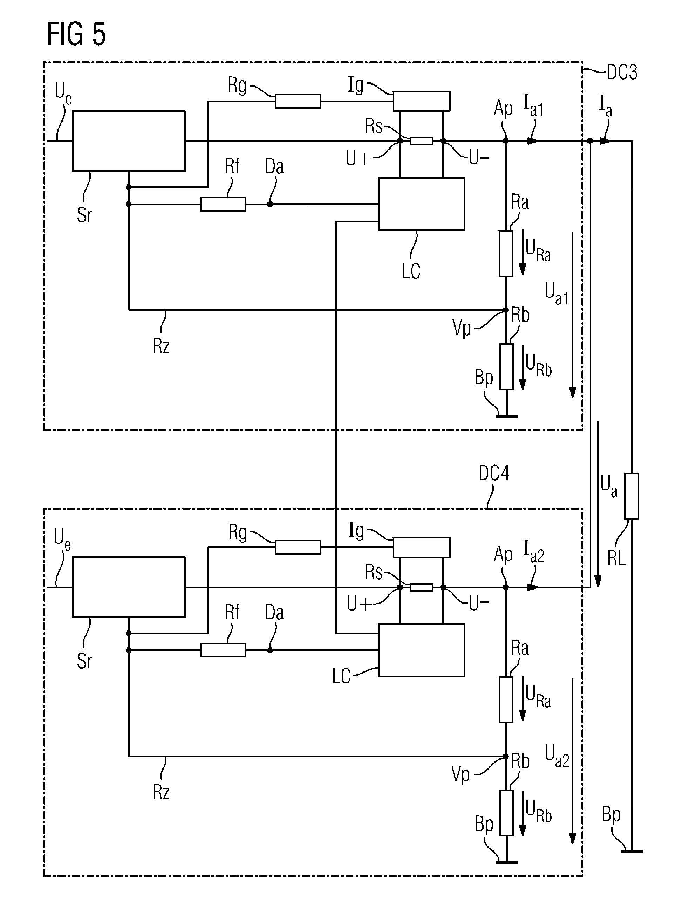

Figur 5 zeigt eine Ausführungsform von zwei parallel geschalteten Schaltungsanordnungen DC3, DC4, wobei diese anstatt mit einem Differenzverstärker jeweils mit einem so genannten, an sich bekannten Loadshore-Controller LC versehen sind. Diese Controller LC sind kommunikativ über eine Kommunikationsleitung Kl verbunden, über welche die Controller LC Informationen - z. B. Informationen über die Höhe der gerade der Last RL bereitgestellten Leistung - austauschen. Auch hier sind Integratoren Ig vorgesehen, mittels denen Bauteiltoleranzen kompensiert werden, um eine im Wesentlichen symmetrische Auslastung der Quellen DC3, DC4 zu erzielen.

**Patentansprüche**

1. Schaltungsanordnung zur Versorgung einer Last (RL) mit einem Ausgangsstrom ($I_a$), wobei

    - ein an einem Bezugspotential (Bp) und an einem Anschlusspunkt (Ap) der Last (RL) angeschlossener Spannungsteiler (Ra, Rb) eines Schaltreglers (Sr) parallel zur Last (RL) geschaltet ist,
    - ein Rückkopplungszweig (Rz) an einem Verbindungspunkt (Vp) des Spannungsteilers (Ra, Rb) und an dem Schaltregler (Sr) angeschlossen ist, wobei der Schaltregler (Sr) unabhängig vom Ausgangsstrom ($I_a$) am Rückkopplungszweig (Rz) eine erste konstante Spannung ($U_{Rb}$) einstellt,
    - erste Mittel vorgesehen sind, welche über einen Messwiderstand (Rs) den Ausgangsstrom ($I_a$) erfassen und welche den Rückkopplungszweig (Rz) derart beeinflussen, dass sich eine zweite Spannung ($U_{Ra}$) zwischen dem Verbindungspunkt (Vp) und dem Anschlusspunkt (Ap) der Last (RL) in Abhängigkeit des Ausgangsstroms ($I_a$) ändert, wobei an der Last (RL) die erste und zweite Spannung ($U_{Ra}$, $U_{Rb}$) als Ausgangsspannung ($U_a$) anliegt,
    **dadurch gekennzeichnet, dass** ferner zweite Mittel (Ig) vorgesehen sind, welche bei Volllast die Ausgangsspannung ($U_a$) auf einen vorgegebenen Wert ($U_{an}$) begrenzen oder absenken, falls der Ausgangsstrom ($I_a$) einen Grenzwert ($I_{an}$) erreicht oder überschreitet.

2. Schaltungsanordnung nach Anspruch 1, **dadurch gekennzeichnet, dass** die ersten Mittel einen Differenzverstärker (Dv) oder einen Loadshare-Controller (LC) aufweisen, wobei ein Ausgang (Da) des Differenzverstärkers (Dv) oder des Loadshare-Controllers (LC) über einen Widerstand (Rf) an den Verbindungspunkt (Vp) des Spannungsteilers (Ra, Rb) angeschlossen ist.

3. Schaltungsanordnung nach Anspruch 1 oder 2, **dadurch gekennzeichnet, dass** die zweiten Mittel eine nach Art eines Integrators (Ig) ausgebildete Einheit sind, welche über den Messwiderstand (Rs) den Ausgangsstrom ($I_a$) erfassen.

4. DC-Stromversorgung zur Versorgung einer Last (RL) mit mindestens zwei parallel geschalteten Schaltungsanordnungen (DC1, DC2; DC3, DC4) nach einem der Ansprüche 1 bis 3.

FIG 1

FIG 2

FIG 3

FIG 4

## FIG 5

**Europäisches Patentamt**
**European Patent Office**
**Office européen des brevets**

## EUROPÄISCHER RECHERCHENBERICHT

Nummer der Anmeldung

EP 09 15 9778

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,A | DE 10 2005 014992 A (SIEMENS AG) 27. Juli 2006 (2006-07-27) * Zusammenfassung * * Absätze [0007], [0008] * * Abbildungen 1,3 * | 1 | INV. H02M3/158 |
| A | US 5 200 643 A (STUART C. BROWN) 6. April 1993 (1993-04-06) * Abbildungen 1-3 * * Zusammenfassung * * Spalte 3, Zeile 61 - Spalte 4, Zeile 29 * * Spalte 4, Zeile 52 - Spalte 5, Zeile 3 * | 1 | |
| A | US 5 834 925 A (JAY A. CHESAVAGE) 10. November 1998 (1998-11-10) * Zusammenfassung * * Abbildungen 3,4 * * Spalte 6, Zeile 65 - Spalte 7, Zeile 19 * | 1 | |
| A | US 2006/273740 A1 (SAKDA SAEUENG ET AL.) 7. Dezember 2006 (2006-12-07) * Zusammenfassung * * Abbildung 2 * * Absätze [0013], [0014] * | 1 | **RECHERCHIERTE SACHGEBIETE (IPC)** H02M |
| A | US 2004/245970 A1 (PHILIP C. TODD ET AL.) 9. Dezember 2004 (2004-12-09) * Abbildungen 1-3 * * Absätze [0029], [0030], [0039] * | 1 | |
| A | US 4 924 170 A (CHRISTOPHER P. HENZE) 8. Mai 1990 (1990-05-08) * Zusammenfassung * * Abbildungen 6-8 * * Spalte 5, Zeile 40 - Spalte 6, Zeile 47 * * Spalte 8, Zeile 66 - Spalte 9, Zeile 3 * | 1 | |

Der vorliegende Recherchenbericht wurde für alle Patentansprüche erstellt

| Recherchenort | Abschlußdatum der Recherche | Prüfer |
|---|---|---|
| Den Haag | 10. August 2009 | Lund, Michael |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 15 9778

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-08-2009

| Im Recherchenbericht angeführtes Patentdokument | Datum der Veröffentlichung | Mitglied(er) der Patentfamilie | Datum der Veröffentlichung |
|---|---|---|---|
| DE 102005014992 A | 27-07-2006 | KEINE | |
| US 5200643 A | 06-04-1993 | KEINE | |
| US 5834925 A | 10-11-1998 | KEINE | |
| US 2006273740 A1 | 07-12-2006 | KEINE | |
| US 2004245970 A1 | 09-12-2004 | KEINE | |
| US 4924170 A | 08-05-1990 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102005014992 A1